# EUROPEAN PATENT APPLICATION

(11) **EP 4 391 012 A1**
(43) Date of publication of application: **26.06.2024**
(21) Application number: 23218113.1
(22) Date of filing: 19.12.2023
(51) Int. Cl.: H01J 49/04, H01J 49/00

(54) **SYSTEM AND METHOD FOR DELIVERY OF AN ANALYTE AND A REFERENCE**

(30) Priority: 22.12.2022 GB 202219580
(71) Applicant: Thermo Fisher Scientific (Bremen) GmbH, 28199 Bremen (DE)
(72) Inventor: KUHLBUSCH, Nils, Bremen (DE); JUCHELKA, Dieter, Bremen (DE); HILKERT, Andreas, Bremen (DE)
(74) Representative: Boult Wade Tennant LLP

(57) **Abstract**

The present invention relates to an apparatus for isotope ratio mass spectrometry that comprises: a mass spectrometer comprising a sample input and a system for delivery of an analyte and a reference substance to the mass spectrometer. The system comprising: a switchable multi-way valve, comprising an analyte sample inlet, a reference sample inlet and a delivery outlet, wherein the analyte sample inlet is arranged to receive an analyte sample comprising the analyte, the reference sample inlet is arranged to receive a reference sample comprising the reference substance, and the delivery outlet is configured for passage of the analyte sample or the reference sample out of the multi-way valve to the sample input of the mass spectrometer; a first means, for regulating a supply of the reference sample to the reference sample inlet; and a second means, for regulating a supply of the analyte sample to the analyte sample inlet; wherein the multi-way valve is switchable between a first position and a second position, wherein in the first position, the reference sample inlet is connected to the delivery outlet, for passage of the reference sample through the multi-way valve and to the sample input of the mass spectrometer; and in the second position, the analyte sample inlet is connected to the delivery outlet, for passage of the analyte sample through the multi-way valve and to the sample input of the mass spectrometer. The present invention also relates to a method for isotope ratio mass spectrometry.

## Description

### Field of the disclosure

A system and a method for isotope ratio mass spectrometry. Further described is a system and method for delivery of an analyte and a reference substance to measurement apparatus. In an example, the measurement apparatus is a mass spectrometer. The system uses a multi-way valve, and a first and second means for independently regulating the supply of an analyte and a reference sample.

### Background to the disclosure

Certain experiments require injection of an analyte and reference sample into measurement apparatus. For instance, in isotope ratio mass spectrometry an analyte sample and a reference sample are passed to a detector for analysis, wherein comparison of the measurement of the two types of samples provides information on the relative concentration of types of ions within the analyte.

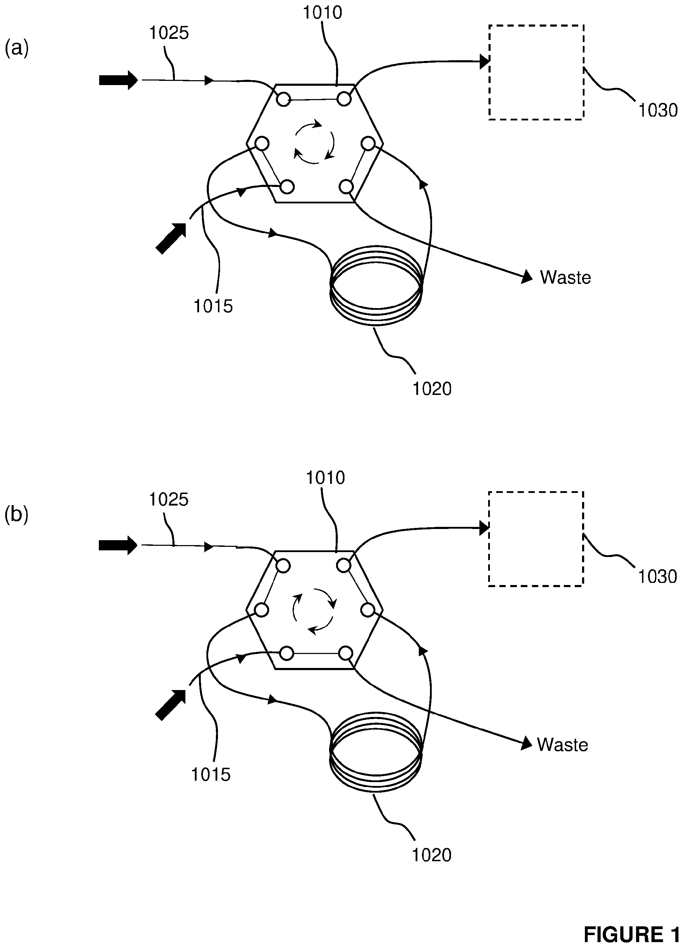

A six-port valve is commonly used in sample delivery systems, including those in liquid chromatography (LC) and ion chromatography (IC). FIGURE 1 shows an example six-port valve 1010, comprising a rotor with six ports arranged around a central axis of rotation. Initially, a first port may be connected to an adjacent second port, wherein rotation of the rotor around the central axis by an angle of 60° causes the first port to be connected to an adjacent third port.

More particularly, when the six-way valve 1010 is in a first position during a loading period, the sample can be injected from a sample supply 1015 to pass into a sample loop 1020. At the same time, a carrier or mobile phase (such as a solvent) is provided via a supply 1025 to the six-port valve and passed through the six-port valve to measurement apparatus 1030 (including a mass spectrometer, or a chromatography column). Once the sample loop 1020 is filled with the sample, the six-port valve 1010 may be moved to a second position. In the second position during an injection period, the carrier or mobile phase (for instance, a solvent) is supplied 1025 to the sample loop 1020, in order to displace the sample therein and be pushed out of the sample loop 1020 and towards the measurement apparatus 1030. Once the storage loop 1020 is entirely filled with the carrier or mobile phase, then an amount of sample equal to the volume of the sample loop 1020 has been injected into the measurement apparatus 1030.

In this set-up, the reference is loaded at the six-way valve 1010, and subsequently delivered to the measurement apparatus 1030 during a first period in which the six-way valve 1010 is in the second position. During a following second period the carrier or mobile phase is received at the measurement apparatus 1030 whilst the six-way valve 1010 is in the first position. The analyte sample is loaded at the six-way valve 1010 during this second period. During a third period following the second period, the six-way valve 1010 is placed in the second position and the analyte sample is delivered to the measurement apparatus 1030.

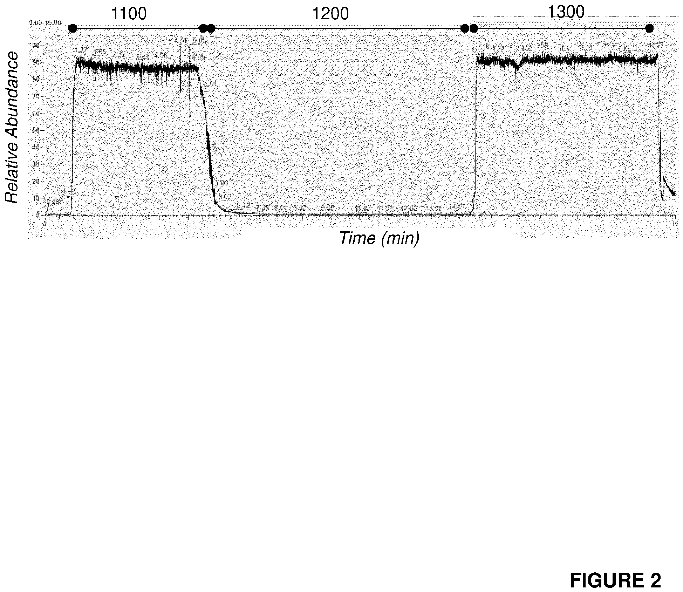

In the second period, no useful data (being data that will ultimately be used to analyse the analyte) is measured at the measurement apparatus, although the carrier or mobile phase may act to flush the system. FIGURE 2 shows a plot of the relative abundance of ions measured during the first, second and third periods. In a first period 1100 (the injection period of the reference sample), the relative abundance is high. In a second period 1200 (the loading period for a sample into the sample loop, whilst the carrier or mobile phase passes to the measurement apparatus), the relative abundance is low. In a third period 1300 (the injection period for the analyte sample), the relative abundance is high once again. It can be seen that the second period 1200 is essentially redundant to the measurement.

The sample supplied during the first 1100 and the third 1300 periods may be an analyte or a reference sample. A user of the apparatus may select whether the sample loaded is the analyte or the reference, for instance by changing a reservoir connected to the sample supply. Therefore, in measurements where an analyte sample or a reference sample are measured, some user input is typically required.

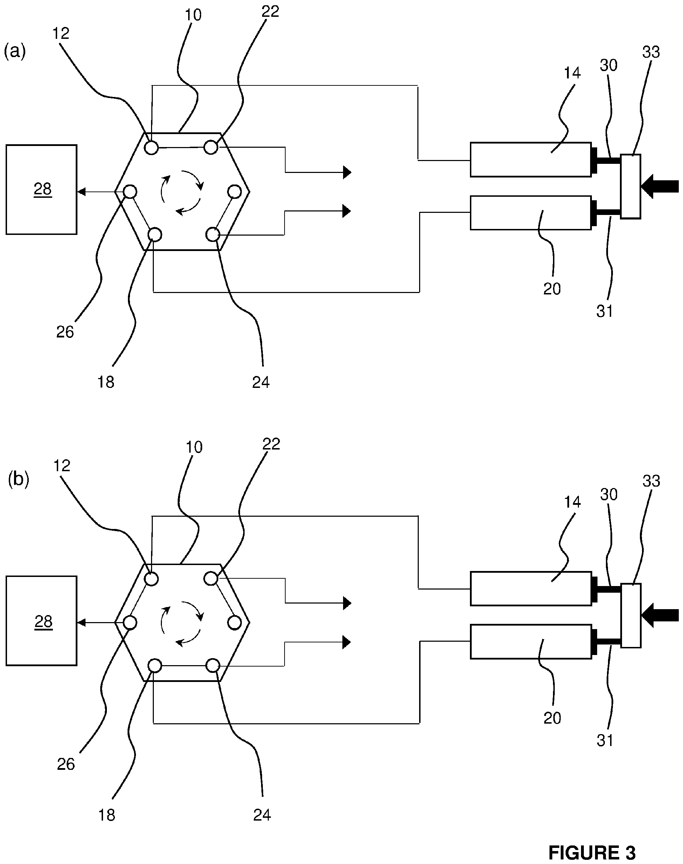

A principle of equal treatment for an analyte sample and a reference sample has been shown to improve the accuracy of analysis of the analyte in isotope ratio mass spectrometry. One mechanism for delivery of the samples with equal treatment is described by Hilkert et al. in Analytical Chemistry (2021) 93 (26) p. 9139-9148 and illustrated in FIGURE 3. The described system uses dual syringes with a multi-way valve (here being a six-port valve). Dual syringes comprise first and second syringes 14, 20, each with a single barrel and a respective outlet. Each syringe contains a different solution. Force is applied to a plunger 30, 31 within the barrel of each syringe 14, 20 in order to expel sample from the outlet at each syringe 14, 20. Force is applied to the plunger 30, 31 at each syringe using a common syringe pump 33 or motorised actuator. The use of a common syringe pump 33 applied to both the first syringe 14 and the second syringe 20 causes the plunger 30, 31 at each syringe 14, 20 to be moved simultaneously and with equal applied pressure, in order to concurrently expel sample from each syringe 14, 20 at an equal rate. In order to deliver either the analyte sample or reference sample towards measurement apparatus 28, a six-way valve 10 is used, connected to the outlet at each syringe as described below.

In particular, FIGURE 3 shows the first syringe 14 and second syringe 20 connected to the six-way valve 10. The six-way valve 10 has two inlets - an analyte inlet 12 connected to the first syringe 14 containing an analyte, and a reference inlet 18 connected to the second syringe 20 containing a reference sample. The six-way valve 10 also comprises three outlets - a first waste outlet for the analyte (i.e., an analyte waste outlet 22), a second waste outlet for the reference sample (i.e., a reference waste outlet 24), and a delivery outlet 26 for passage of fluid to the next stage of the system (being measurement apparatus 28). The six-way valve 10 is switchable between a first and a second position, in order to connect different pairs of the inlets and the outlets.

FIGURE 3(a) shows the syringes 14, 20 and six-way valve 10 in a first position. In particular, the reference inlet 18 is connected to the delivery outlet 26, whilst the analyte inlet 12 is connected to the analyte waste outlet 22. By operation of the common syringe pump 33, the reference sample and the analyte sample each pass continuously out of their respective outlet at each of the first syringe 14 and second syringe 20 and then pass through the respective inlet of the six-way valve 10. In the first position for the six-way valve 10, the reference sample flows through the six-way valve 10 towards the measurement apparatus 28, whilst the flow of analyte sample passes through the multi-way valve 16 and then out to waste (the waste is not shown in FIGURE 3).

FIGURE 3(b) shows the dual syringe 16 and six-way valve 10 apparatus in a second position. In particular, the analyte inlet 12 is connected to the delivery outlet 26, whilst the reference inlet 18 is connected to the reference waste outlet 24. Operation of the common syringe pump 33 causes the reference sample and the analyte sample to pass continuously out of their respective outlet at each of the first syringe 14 and second syringe 20 and pass through the respective inlet of the six-way valve 10. In the second position for the six-way valve 10, the analyte sample flows through the six-way valve 10 towards the measurement apparatus 28, whilst the flow of reference sample passes through the six-way valve 10 and into the waste.

Although the first and second syringes 14, 20 and six-way valve 10 successfully deliver either an analyte or reference sample toward the onward measurement apparatus 28, a significant amount of the analyte sample and reference sample is passed through the respective waste outlet 22, 24 to waste. This can be problematic for a user, because analyte samples are often expensive and may not be available in abundance. Moreover, syringes 14, 20 have a limited volume, and so to perform sequential measurements manual intervention is often required by a user in order replace the first and second syringe 14, 20 or refill barrels of the syringes 14, 20.

An improved system for delivery of an analyte and a reference substance to measurement apparatus would be of value.

### Summary of the disclosure

In accordance with the present invention, there is provided an apparatus for isotope ratio mass spectrometry as set out in claim 1 and a method for isotope ratio mass spectrometry as set out in claim 12.

In a first aspect there is a system for delivery of an analyte and a reference substance to measurement apparatus, the system comprising:
a switchable multi-way valve, comprising an analyte sample inlet, a reference sample inlet and a delivery outlet, wherein the analyte sample inlet is arranged to receive an analyte sample comprising the analyte, the reference sample inlet is arranged to receive a reference sample comprising the reference substance, and the delivery outlet is configured for passage of the analyte sample or the reference sample out of the multi-way valve towards the measurement apparatus;
a first means, for regulating a supply of the reference sample to the reference sample inlet; and
a second means, for regulating a supply of the analyte sample to the analyte sample inlet;
wherein the multi-way valve is switchable between a first position and a second position, wherein
   in the first position, the reference sample inlet is connected to the delivery outlet, for passage of the reference sample through the multi-way valve and towards the measurement apparatus; and
   in the second position, the analyte sample inlet is connected to the delivery outlet, for passage of the analyte sample through the multi-way valve and towards the measurement apparatus.

In a second aspect there is a method for delivery of an analyte and a reference substance to measurement apparatus, comprising:
supplying an analyte sample to an analyte sample inlet at a multi-way valve, the analyte sample comprising the analyte, wherein the supply of the analyte sample is regulated by a first means;
supplying a reference sample to a reference sample inlet at the multi-way valve, the reference sample comprising the reference substance, wherein the supply of the reference sample is regulated by a second means;
switching the multi-way valve from a first position to a second position, the multi-way valve further comprising a delivery outlet configured for passage of the analyte sample or the reference sample towards the measurement apparatus;
wherein
   in the first position, the reference sample inlet is connected to the delivery outlet for passage of the reference sample through the multi-way valve and towards the measurement apparatus; and
   in the second position, the analyte sample inlet is connected to the delivery outlet for passage of the analyte sample through the multi-way valve and towards the measurement apparatus.

In a third aspect there is a method for isotope ratio mass spectrometry, comprising:
arranging the multi-way valve in the system as described above in the first position for delivery and measurement of the reference substance to the measurement apparatus, wherein the measurement apparatus is a mass spectrometer;
arranging the multi-way valve in the system as described above in the second position for delivery and measurement of the analyte to the measurement apparatus, wherein the measurement apparatus is a mass spectrometer;
determining an isotopic ratio of the analyte by comparison of a measurement of the analyte sample with a measurement of the reference substance.

In a fourth aspect there is apparatus for isotope ratio mass spectrometry, comprising:
a mass spectrometer; and
the system, as described above, wherein the measurement apparatus is the mass spectrometer;
the system being configured to deliver an analyte or a reference substance to a sample input of the mass spectrometer.

### Brief description of the figures

The invention may be put into practice in various ways, some of which will now be described by way of example only and with reference to the accompanying drawings in which:
FIGURE 1 is a schematic diagram showing an example of a six-way valve for use in sample delivery according to the prior art. FIGURE 1(a) shows the six-way valve in a first position, and FIGURE 1(b) shows the six-way valve in a second position;
FIGURE 2 is an example plot of the relative abundance of ions in an analyte sample and a reference sample measured using the system discussed with reference to FIGURE 1;
FIGURE 3 is a schematic diagram showing an alternative example of dual syringes and a six-way valve used for sample delivery according to the prior art. FIGURE 3(a) shows the six-way valve in a first position, and FIGURE 3(b) shows the six-way valve in a second position;
FIGURE 4 is a schematic diagram showing a first embodiment of the sample delivery system comprising a multi-way valve according to the present disclosure. FIGURE 4(a) shows the multi-way valve in a first position for delivery of a reference sample, and FIGURE 4(b) shows the multi-way valve in a second position for delivery of an analyte sample;
FIGURE 5 is an example plot of the relative abundance of ions in an analyte sample and a reference sample measured using the system for delivery of an analyte and a reference substance to measurement apparatus described with reference to FIGURE 4;
FIGURE 6 is a control diagram for the position of the multi-way valve and for the reference syringe pump in a system as described with reference to FIGURE 4;
FIGURE 7 is a schematic diagram showing a second embodiment of the sample delivery system comprising a multi-way valve according to the present disclosure. FIGURE 7(a) shows the multi-way valve in a first position for delivery of a reference sample, and FIGURE 7(b) shows the multi-way valve in a second position for delivery of an analyte sample;
FIGURE 8 is a schematic diagram showing the sample delivery system comprising a multi-way valve and incorporating an analyte passed through a liquid chromatography column. FIGURE 8(a) shows the multi-way valve in a first position for delivery of a reference sample, and FIGURE 8(b) shows the multi-way valve in a second position for delivery of an analyte sample; and
FIGURE 9 is a schematic diagram of the disclosed system for delivery of an analyte and a reference substance used for delivery to a mass spectrometer.

It will be understood that like features are labelled using like reference numerals. The figures are not to scale.

### Detailed description of specific embodiments

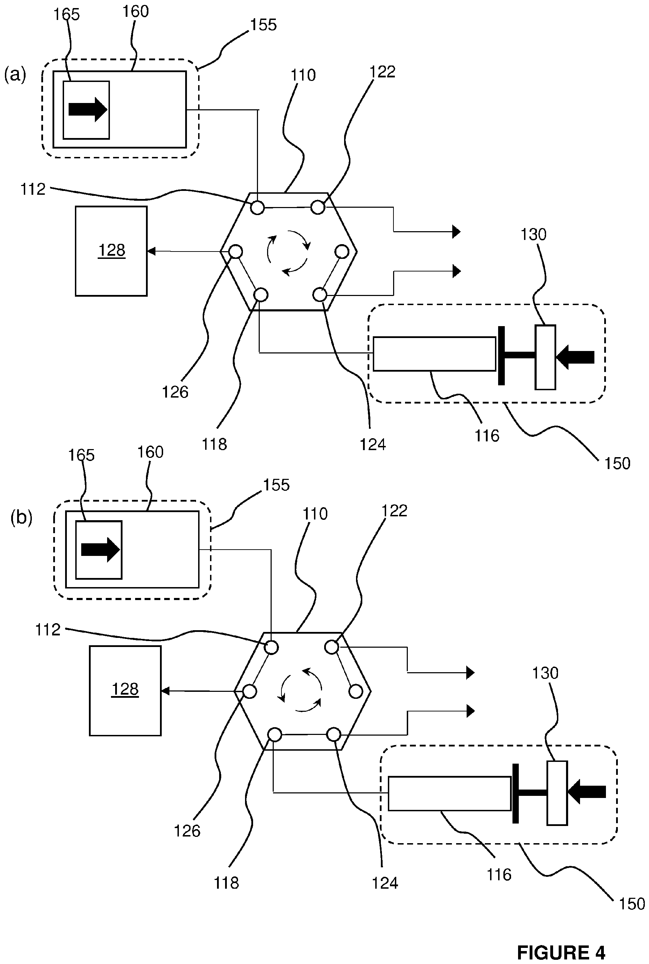

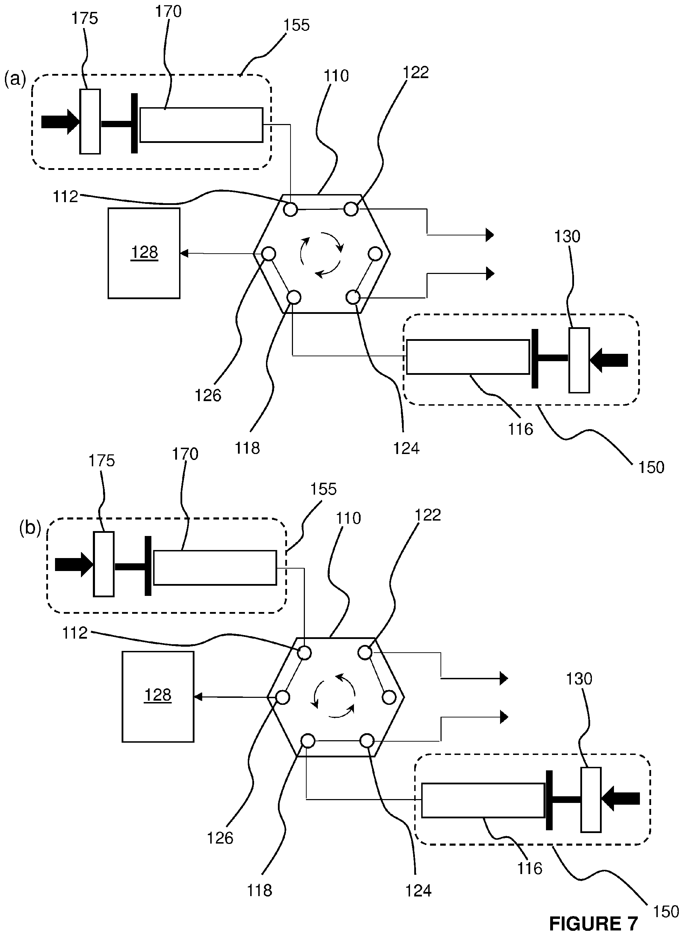

There is described below an improved system for delivery of an analyte and a reference substance to measurement apparatus. Any embodiments of the system described may be part of an apparatus for isotope ratio mass spectrometry, the apparatus further comprising the measurement apparatus. The measurement apparatus may be a mass spectrometer comprising a sample input for receiving the analyte and reference substance delivered by the system. A first embodiment of the system is discussed with respect to FIGURES 4 to 6, and a second embodiment of the system is discussed with respect to FIGURE 7. Each of the first and second embodiment use the same (first) means for supplying a reference sample to the reference sample inlet but different (second) means for supplying an analyte sample to the analyte sample inlet. However, it will be understood that any reasonable means could be used to supply the reference sample and analyte sample, providing those means are separate and can be used to regulate the supply of the reference sample and analyte sample independently, including initiating or terminating supply, and/or modifying the rate of supply. The analyte sample and the reference sample are fluids. In the described example, the analyte sample and the reference sample are liquids. The analyte and the reference substance are either provided in a liquid carrier, or as the analyte or reference substance in the liquid phase. However, it will be understood that the analyte sample and the reference sample could be a gas (either having the analyte or reference substance in the gas phase, or within a gas carrier).

Referring to FIGURE 4, there is shown a first embodiment of an improved system for delivery of an analyte and a reference substance to measurement apparatus 128. The measurement apparatus may be any apparatus required for a further stage of measurement, for example including by not limited to a mass spectrometer, or another form of spectroscopic analyser and/or detector. The system of FIGURE 4 includes a multi-way valve 110, in this case having six ports and being similar in structure to that used within the system described above with reference to FIGURE 3. However, in the system of FIGURE 4 the various ports at the multi-way valve 110 are connected to different elements. Furthermore, in the system of FIGURE 4 a first means 150 is used to provide the reference sample supplied to the reference inlet 118 at the multi-way valve 110, and a second means 155 (that is separate and independent from the first means) is used to provide the analyte sample to the analyte inlet 112 of the multi-way valve 110. The first means 150 and second means 155 enable regulation of the supply of the reference sample and the analyte sample to the respective inlets. In other words, the first means 150 and second means 155 can initiate or terminate supply, or adapt the rate of supply of the given type of sample.

In the particular embodiment of FIGURE 4, the first means may be a syringe 116 for supplying the reference sample. A syringe pump 130 may be coupled to the syringe 116, wherein the syringe pump 130 acts to controls the rate of ejection of the reference sample from an outlet at the syringe 116. The syringe pump 130 may comprise an actuator for application of force to a plunger of the syringe 116.

In the particular embodiment of FIGURE 4, the second means may be an autosampler 160 (for instance, an autosampler having a storage loop) configured to load and eject an analyte sample. The autosampler 160 may comprise, or be used in conjunction with, a pump 165 which operates to expel the sample from the autosampler 160 and/or to control the rate at which the sample is expelled from the autosampler 160.

The multi-way valve 110 shown in FIGURE 4 comprises a delivery outlet 126, for passage of an analyte or reference sample out of the multi-way valve 110 and towards the measurement apparatus 128. The multi-way valve 110 also comprises an analyte waste outlet 122, and a reference waste outlet 124. The reference sample is received from the syringe 116 at a reference sample inlet 118 of the multi-way valve 110 and the analyte sample is received through an analyte sample inlet 112 at the multi-way valve 110 from the autosampler 132. The multi-way valve 110 can be switchably and controllably arranged in a first position or a second position.

FIGURE 4(a) shows the multi-way valve 110 in the first position, in which a reference sample is passed through the delivery outlet 126 towards the measurement apparatus 128. In particular, the multi-way valve 110 is configured to connect the reference sample inlet 118 to the delivery outlet 126, whilst the analyte sample inlet 112 is connected to the analyte waste outlet 122.

FIGURE 4(b) shows the multi-way valve 110 in the second position, in which an analyte sample is passed through the delivery outlet 126 towards the measurement apparatus 128. Here, the multi-way valve 110 is configured to connect the analyte sample inlet 112 to the delivery outlet 126, whilst the reference sample inlet 118 is connected to the reference waste outlet 124.

It should be noted that the system discussed with reference to FIGURE 4, just as in the system discussed with reference to FIGURE 3, operates under the principle of identical treatment for both the analyte and reference sample. In the system described with reference to FIGURE 4, the analyte and reference samples received at the multi-way valve 110 will be provided at the same temperature and through the respective inlet at the same sample flow rate. The autosampler 132 typically offers significant control over the flow rate, which is determined by the flow rate of the pump 165 at the autosampler 160. The flow rate for the reference sample can be controlled by the rate of movement of the plunger at the syringe 116 by the syringe pump 130.

The first means 150 and second means 155, as described above, can be used to supply a sample to the respective inlet 118, 112 at the multi-way valve 110 only or primarily when the multi-way valve 110 is in one of the first or the second position. For instance, the first means 150 (in FIGURE 4 being the syringe 116 for supplying the reference sample and the associated syringe pump 130) can be operated to initiate supply of the reference sample to the multi-way valve 110 only when the multi-way valve 110 is in the first position, or shortly before the multi-way valve 110 is switched from the second position to the first position. This avoids significant amounts of the reference sample being directed to waste via the multi-way valve 110 when the multi-way valve 110 is in the second position. Similarly, the second means 155 (in FIGURE 4 being an autosampler 160) can be used to regulate the supply of the analyte sample to the multi-way valve 110, and to ensure that the analyte sample is supplied to the multi-way valve 110 only when the multi-way valve 110 is in the second position. For instance, this could be by suitable operation of the autosampler 160, to initiate a period of ejection of the sample only when the multi-way valve 110 is switched to the second position. Accordingly, providing a first means 150 and second means 155 that are independently controllable to minimise wastage of the analyte and reference sample.

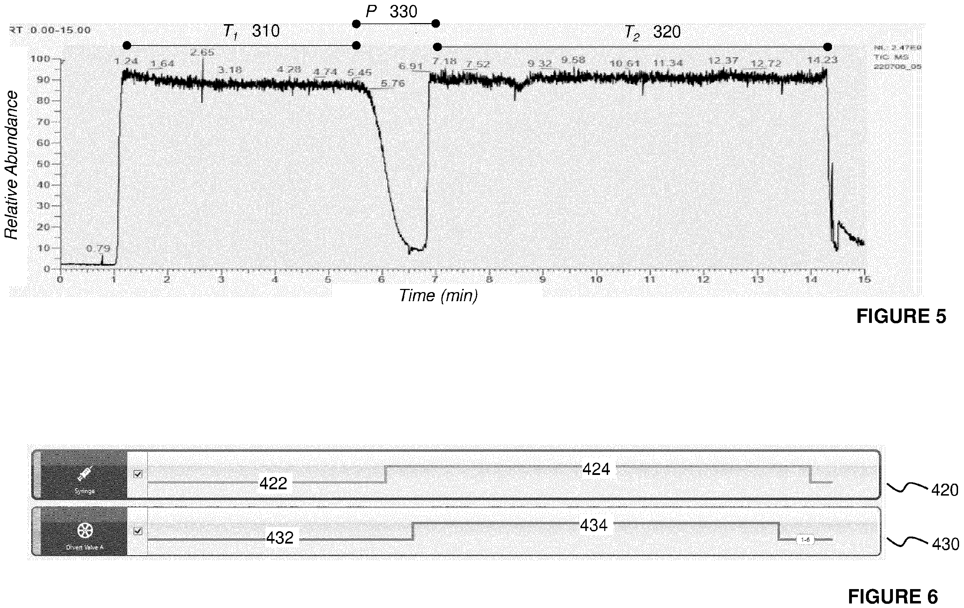

FIGURE 5 shows a plot of relative ion abundance measured at a detector, wherein the detector forms part of measurement apparatus 128 to which the system discussed with reference to FIGURE 4 is used to deliver an analyte or reference sample. The plot shown in FIGURE 5 shows a first time period *T₁* 310 during which the multi-way valve is in the second position and then a second time period *T₂* 320 during which the multi-way valve is in the first position. It can be seen that the analyte and the reference samples are received and measured at the detector during first and second periods respectively, with only a very short interval between. When analysing the measured data, a portion P 330 of the measured data closest to the time at which the multi-way valve was switched between the first and second position may be disregarded, in order to remove any anomalous data related to a mixing of the analyte sample and reference sample.

The plot in FIGURE 5 (measured using the delivery system of FIGURE 4) can be compared to the equivalent plot in FIGURE 2 (measured using the delivery system of FIGURE 1). In particular, it can be seen that the interval of redundant measurement time 1200, 330 (in which neither the measurement of the reference nor analyte sample is established) is much shorter in the plot of FIGURE 5 than compared to the plot of FIGURE 2. In particular, the time 1200 during which a solvent is supplied to the measurement apparatus in the system of FIGURE 1 is entirely removed when using the system of FIGURE 4. This is because the multi-way valve 110 in FIGURE 4 allows for the reference sample to be supplied during the period 320 for loading the analyte sample at the autosampler, whereas the system of FIGURE 1 necessarily supplies solvent to the measurement apparatus during a period 1200 whilst either the analyte or reference sample are loaded at the storage loop. As such, the system in FIGURE 4 is much more time efficient than that shown in FIGURE 1 and allows a full measurement to be completed in less time.

FIGURE 6 shows plots illustrating the control of aspects of the system shown in FIGURE 4, including the position of the multi-way valve and the actuation of the syringe pump (connected to the syringe for delivery of the reference sample) over time. In particular, a first plot 420 shows the operation over an interval of time of the syringe pump 130 to compress the plunger at the syringe 116 delivering the reference sample to the reference inlet 118 at the multi-way valve 110. In a first period 422, the syringe pump 130 is 'off' (i.e., the syringe pump 130 is not moving, and so not compressing the plunger so as to avoid expelling the reference sample from the syringe 116). In a second period 424, the syringe pump 130 is 'on' (i.e., the syringe pump 130 is moving, in order to compress the plunger and expel reference sample from the syringe 116). In the second plot 430 over the same period of time, the multi-way valve 110 is switched between being in the second position (for delivery of the analyte) during a first period of time 432, and being in the first position (for delivery of the reference sample) during a second period of time 434. Comparison of the second plot 420 and the third plot 430 shows that the syringe pump 130 is operated only during a period that starts shortly before and ends shortly after the period during which the multi-way valve 110 is in the first position. This allows the flow of the reference sample to be fully established by the time the multi-way valve 110 is switched from the second position to the first position, whilst also ensuring that the amount of reference sample passed to waste at the end of the period of delivery of the reference sample to the measurement apparatus is minimised. However, it will be understood that in an alternative example, the syringe pump 130 may be switched on simultaneously with the multi-way valve 110 being switched to the first position, and the syringe pump 130 may be switched off simultaneously with the multi-way valve 110 being switched to the second position. This alternative example would reduce the amount of reference sample passed to waste still further.

FIGURE 7 shows a second embodiment of an improved system for delivery of an analyte and a reference substance to measurement apparatus 128. The measurement apparatus 128 may be, for example, a mass spectrometer. The system of FIGURE 7 includes a multi-way valve 110 similar to that used within the system described above with reference to FIGURE 4, and having the same ports (including an analyte sample inlet 112, a reference sample inlet 118, a delivery outlet 126, an analyte waste outlet 122, and a reference waste outlet 124).

In the system of FIGURE 7 a first means 150 is used to provide the reference sample supplied to the reference sample inlet 118 at the multi-way valve 110, and a second means 155 (that is separate and independent from the first means) is used to provide the analyte sample to the analyte sample inlet 112 of the multi-way valve 110. The first means 150 and second means 155 enable regulation of the supply of the reference sample and the analyte sample respectively, in other words the first means 150 and second means 155 can initiate or terminate supply, or adapt the rate of supply of the given type of sample.

In the particular embodiment of FIGURE 7, the first means 150 comprises a first syringe 116 for supplying the reference sample. A first syringe pump 130 may be coupled to the first syringe 116, wherein the first syringe pump 130 acts to control the rate of ejection of the reference sample from an outlet at the first syringe 116. The first syringe pump 130 may comprise an actuator for application of force to a plunger 130 of the first syringe.

In the particular embodiment of FIGURE 7, the second means 155 may be a second syringe 170 for supplying the analyte sample. A second syringe pump 175 may be coupled to this second syringe 170, wherein the second syringe pump 175 acts to control the rate of ejection of the analyte sample from an outlet at the second syringe 170. The second syringe pump 175 may comprise an actuator for application of force to a plunger 130 of the second syringe 170. The first syringe pump 130 and second syringe pump 175 are separate entities and independently controllable.

As before, the multi-way valve 110 is switchable between a first and a second position. FIGURE 7(a) shows the multi-way valve 110 in the first position, in which a reference sample is passed through the delivery outlet 126 towards the measurement apparatus 128. In particular, the multi-way valve 110 is configured to connect the reference sample inlet 118 to the delivery outlet 126, whilst the analyte sample inlet 112 is connected to the analyte waste outlet 122. FIGURE 7(b) shows the multi-way valve 110 in the second position, in which an analyte sample is passed through the delivery outlet 126 towards the measurement apparatus 128. Here, the multi-way valve 110 is configured to connect the analyte sample inlet 112 to the delivery outlet 126, whilst the reference sample inlet 118 is connected to the reference waste outlet 124.

The system of FIGURE 7 operates under the principle of identical treatment for both the analyte and reference sample. In particular, when injected through the multi-way valve 110 and towards the measurement apparatus 128, the flow rate of the reference sample or the analyte sample is equal or as close as possible to equal, and both samples are ideally maintained at the same temperature. The flow rate for each sample can be controlled by the first 130 and second 175 syringe pumps applied to the respective first 116 and second 170 syringe. The syringe pumps 116, 170 can also be used to initiate flow of the reference or the analyte sample only when the multi-way valve 110 is in the first and second position, respectively, as described above in relation to the operation of the first 150 and second 155 means in FIGURE 4.

As will be understood, the system described, including switching of the multi-way valve 110 between the first and the second position, allows delivery of either the reference sample or the analyte sample to the measurement apparatus 128. As such, the proposed system can be used to provide an analyte sample to the measurement apparatus 128 during specific periods, whilst providing the reference sample to the measurement apparatus 128 during intervening periods. The first means 150 (here being the syringe 116 containing the reference sample and the cooperative syringe pump 130) may be operated so as to supply the reference sample primarily or only when the multi-way valve 110 is in the first position. Similarly, the second means 155 (here being the autosampler 160, or the syringe 170 and cooperative syringe pump 175) may be operated so as to supply the analyte sample primarily or only when the multi-way valve 110 is in the second position.

The system described has a number of benefits over the prior art. Firstly, use of a first means 150 for supply of the reference sample and a second means 155 for supply of the analyte sample, wherein the first 150 and second 155 means are separate and independently controllable compared to each other, allows the given supply to be switched on or off (or the rate of supply to be changed) in order to supply one or other type of sample to the multi-way valve 110 only during a period when the multi-way valve 110 is in an appropriate position to pass the given sample to the measurement apparatus 128. Thus, compared to the system described with reference to FIGURE 3, there is reduced wastage of the analyte sample (which may be expensive, or rare), as well as reduced wastage of the reference sample. In particular, in the system of FIGURE 3 the syringe pump 30 is applied to both the reference syringe 20 and the analyte syringe 14 simultaneously. This causes a portion of the analyte and the reference sample (dependent on the position of the multi-way valve) to be directed to waste. In the system discussed with reference to FIGURE 4, the sample can be ejected from the autosampler 160 only during periods in which the multi-way valve 110 is in the second position. An autosampler 160 outputs a precisely measured volume of analyte and at a flow rate prescribed by the pump rate at a pump 165 at the autosampler 160. Furthermore, the system can be configured to apply pressure to the plunger of the syringe 116 of the reference sample (using the syringe pump 130) only during periods when the multi-way valve 110 is in the first position. Therefore, compared to the system of FIGURE 3 the amount of the analyte or reference sample passed to waste is minimised in the systems of FIGURE 4 or 7.

Secondly, unlike situations such as shown in FIGURE 1, in the presently described system any redundant periods when using the measurement apparatus are significantly reduced. In particular, in the presently disclosed system, a reference sample and an analyte sample are supplied to the measurement apparatus without significant interval between. The time 1200 (shown in FIGURE 2) taken to load a sample (reference or analyte) at the storage loop in the system discussed with reference to FIGURE 1 is avoided in the present disclosed system described with reference to FIGURE 4 or 7. In particular, in the presently described system the multi-way valve 110 allows for supply of the reference sample to the measurement apparatus 128 during periods of loading of the analyte sample at an autosampler 160 being the second means 155. As such, the presently disclosed system is especially time efficient.

In view of the above, the presently disclosed system offers both time efficiencies and reduced sample wastage. Still further advantages are presented by the ease of changing between different analyte samples via the second means 155, by swapping an analyte sample reservoir supplied to the autosampler 160 or by swapping the analyte sample syringe 170. Such a swap can take place when the multi-way valve 110 is in the first position, and so does not necessarily require the measurement to be paused. Similarly, a reference substance can be easily substituted for another by swapping of the reference sample syringe 116 during a period in which the multi-way valve 110 is in the second position, and so without requiring significant downtime for the measurement. Overall, the described system is more automated and requires less user supervision and less user input than other known systems for delivery of a sample as previously described.

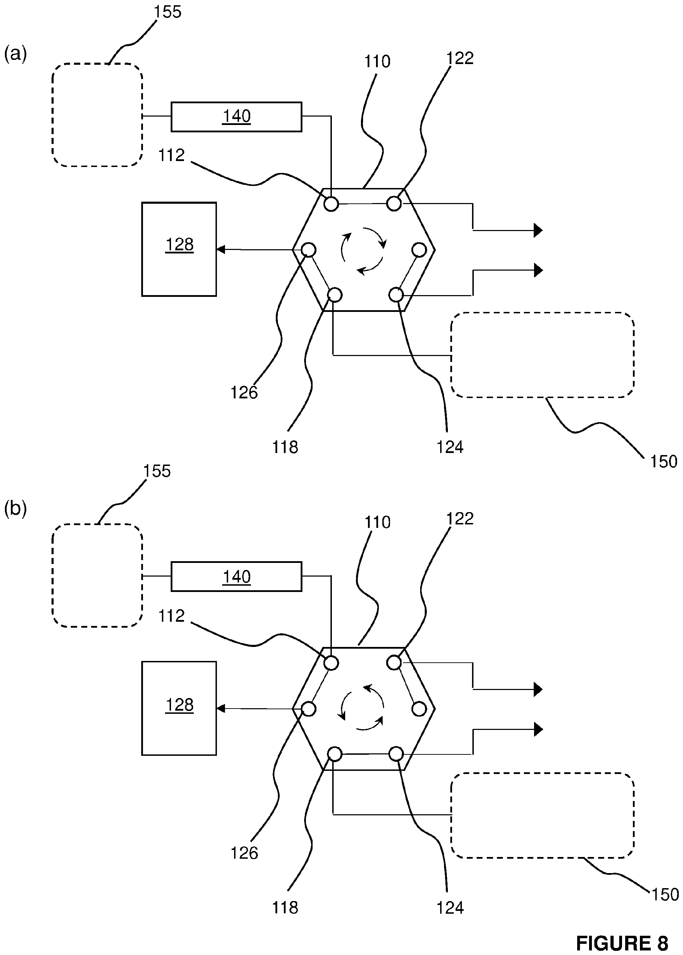

FIGURE 8 shows a system similar to that in FIGURE 4 or 7, except a chromatography column 140 (such as a liquid chromatography column or ion chromatography column) is arranged between the second means 155 for regulating supply of the analyte sample and the analyte sample inlet 112. The multi-way valve 110 can be arranged in the same two positions as described with respect to FIGURES 4(a) and 4(b) or FIGURE 7(a) and 7(b). However, in the system of FIGURE 8(a) and 8(b), the selection of the position of the multi-way valve 110 may be controlled such that, after species of the analyte sample are separated in the chromatography column 140, the multi-way valve 110 is in the second position (as shown in FIGURE 8(b)) to coincide with a particular species exiting the column 140 (and so being directed to the measurement apparatus 128). During periods intervening a time at which species of interest are exiting the chromatography column (as a result of the separation of the analyte within the chromatography column 140), the multi-way valve 110 may be switched to the first position (as shown in FIGURE 8(a)) in order to deliver a reference sample to the measurement apparatus 128. Thus, the system shown in FIGURE 8 provides the ability to perform new types of measurements, in which a reference sample can be delivered to the measurement apparatus precisely interspersed between delivery of different species within an analyte sample that has been separated via chromatography. The system of Figure 8 may be part of an apparatus for isotope ratio mass spectrometry, the apparatus further comprising the measurement apparatus. The measurement apparatus may be a mass spectrometer comprising a sample input for receiving the analyte and reference substance delivered by the system.

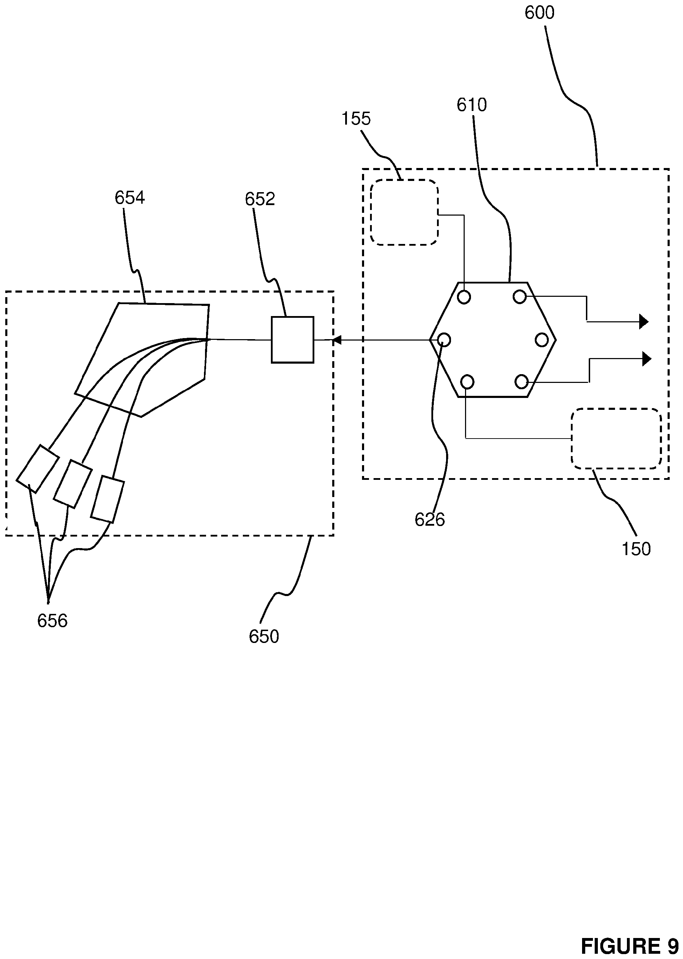

The system may be used to supply an analyte sample or reference sample directly to a mass spectrometer. For instance, the measurement apparatus 128 in FIGURE 4, FIGURE 7 or FIGURE 8 may be a mass spectrometer. FIGURE 9 shows apparatus for mass spectrometry using the described sample delivery system 600. The sample delivery system 600, including first means 150 and second means 155 passes either the reference or analyte sample (dependent on the position of the switchable valve 110) out of a delivery outlet 126 and towards an inlet (referred to herein as sample input) at the mass spectrometer 650. After entry to the mass spectrometer 650, the sample (for instance in the liquid phase) may be passed to an ioniser 652. After ionisation (or vaporisation followed by ionisation) the sample passes into a mass analyser 654. In the example of FIGURE 9, this is optionally a magnetic sector mass analyser. However, other types of mass analysers can be employed in accordance with the invention. For example, the mass analyser 654 may be or may comprise a quadrupole, an ion trap, a time-of-flight, and/or a fourier transform type mass analyser. In particular, the mass analyser 654 may comprise an Orbitrap^{™}. Ions within the sample are separated in the mass analyser 654 according to their mass-to-charge ratio, until eventually being received at one or more detectors 656 (for example, Faraday collectors). Comparison of the ion abundance in the analyte sample and the reference sample at the detectors 656 allow isotope ratios in the analyte to be determined, using common techniques that will be understood by the person skilled in the art. It will be understood that variations on the disclosed system may be implemented. For instance, although FIGURES 4, 7, 8 and 9 show a six-way valve as the multi-way valve, it will be understood that a valve having more than six ports could be used (including an eight-way or a ten-way valve).

Although FIGURES 4, 7, 8 and 9 show introduction of the reference sample to the multi-way valve using a syringe, other methods for supply of the reference sample are possible. In one example, a solvent may flow from a reservoir, and the reference substance may be added in-flow to the solvent before reaching the reference sample inlet at the multi-way valve. The reference substance may be added in a way that is highly controllable (for instance, via a syringe and associated syringe pump, being the first means for regulation of the supply of the reference sample) in order to allow the reference substance to be injected only during certain time intervals during the measurement (such as when the multi-way valve is in the first position).

In a further example, whilst the analyte sample is introduced via the analyte inlet to the multi-way valve from a first autosampler (being the second means), as described above, the reference sample may be introduced via the reference inlet by a second autosampler (here being the first means). In a still further example, the analyte sample and the reference sample may be introduced to the analyte sample inlet and the reference sample inlet, respectively, from different storage loops (or stages) of a dual loop autosampler (wherein the different storage loops comprise the first and second means). In each case, the first and second means are controllable to regulate the flow of the reference and analyte sample, respectively, independently of each other. In both examples, the analyte sample is loaded at an autosampler during a period in which the multi-way valve is in the first position and so supplying the reference sample to the measurement apparatus. On the other hand, where an autosampler is used for supplying the reference sample to the multi-way valve, then the reference sample can be loaded at the given autosampler during the period in which the analyte sample is supplied to the measurement apparatus.

Also discussed in the present disclosure is a method for delivery of an analyte and reference substance using the systems of FIGURE 4 to 7. In addition, there is described a method of measurement via a chromatography column using the sample delivery system of FIGURE 4 to 7 within the apparatus of FIGURE 8. There is also described a method of mass spectrometry, which may be isotope ratio mass spectrometry, using the sample delivery system of FIGURE 4 to 7 within the apparatus of FIGURE 9. In line with these method aspects (and any other method aspect discussed herein), a computer program may be provided, comprising instructions that, when executed by a processor, cause the processor to control the system described to perform the corresponding method. A (non-transitory) computer readable medium comprising or storing thereon such a computer program may also be provided.

In particular, a processor at a controller (not shown) may be configured to control the position of multi-way valve 110 being in the first position or the second position. The processor at the controller may also control the operation of the first or the second means. For instance, the controller may control the operation of the autosampler 160 as the second means. Additionally or alternatively, the controller may control the operation of any pump within the system (including an autosampler pump 165 within the second means, and or the syringe pumps 130, 175 associated with a first or second syringe being the first and second means respectively). The controller may control the measurement apparatus 128 and/or the receipt and/or processing and analysis of data recorded at the measurement apparatus 128. For instance, a computer implemented method or computer program may allow the recorded data to be identified as being associated either with a reference sample or an analyte sample. The controller may be programmable.

In one example, a computer implemented method or computer program may be employed to associate certain time periods of received measured data as being measurements of the reference sample or the analyte sample by taking into account one or more predetermined delays between the start of the measurement and a switch in the position of the multi-way valve 110. In another example, a computer implemented method or computer program may identify characteristic peaks or other typical characteristics associated with the analyte and/or the reference substance in order to identify portions of the data relating to each type of sample. In a still further example, the reference sample may include a substance that generates an indicator peak in an abundance measurement, to act as an indicator of the start of a period of measurement of the reference sample. A computer implemented method or computer program may identify said indicator peak.

In some circumstances, as discussed above with reference to FIGURE 5, data recorded close to or either side of a time point at which the measured sample changes from a reference sample to an analyte sample (or vice versa) may be disregarded during analysis of the data (for instance, portion *P* 330 in FIGURE 5). This can account for or avoid any anomalies that may be present in this portion of the data due to a small amount of inadvertent mixing of the reference sample and analyte sample. A computer implemented method or computer program may be configured to automate the process of disregarding appropriate portions of the recorded data.

The sample introduction system described with respect to FIGURE 4 and FIGURE 7 allows for analyte samples to be passed to a mass spectrometer (being measurement apparatus 128), analysed and detected, whilst interspersed with measurement of a known reference sample. Comparison of the measurements recorded for the analyte and reference sample allow for more precise and accurate determination of the ratio of particular isotopes present in the analyte sample. The described sample introduction system in particular allows for straightforward automated and time efficient switching between delivery of the analyte and the reference sample to the measurement apparatus 128 (for instance, a mass spectrometer).

Although embodiments according to the disclosure have been described with reference to particular types of devices and applications (particularly mass spectrometry) and the embodiments have particular advantages in such case, as discussed herein, approaches according to the disclosure may be applied to other types of device and/or application. Certain features may be omitted or substituted, for example as indicated herein. Each feature disclosed in this specification, unless stated otherwise, may be replaced by alternative features serving the same, equivalent or similar purpose. Thus, unless stated otherwise, each feature disclosed is one example only of a generic series of equivalent or similar features.

In this detailed description of the various embodiments, for the purposes of explanation, numerous specific details are set forth to provide a thorough understanding of the embodiments disclosed. One skilled in the art will appreciate, however, that these various embodiments may be practiced with or without these specific details. Furthermore, one skilled in the art can readily appreciate that the specific sequences in which methods are presented and performed are illustrative and it is contemplated that the sequences can be varied and still remain within the scope of the various embodiments disclosed herein. For instance, the sequencing of the switchable value in either the 'first' or `second' position of the switchable valve is arbitrary.

As used herein, including in the claims, unless the context indicates otherwise, singular forms of terms are to be construed as including the plural form and vice versa. For instance, unless the context indicates otherwise, a singular reference herein including in the claims, such as "a" or "an" means "one or more". Throughout the description and claims of this disclosure, the words "comprise", "including", "having" and "contain" and variations of the words, for example "comprising" and "comprises" or similar, mean "including but not limited to", and are not intended to (and do not) exclude other components. Also, the use of "or" is inclusive, such that the phrase "A or B" is true when "A" is true, "B" is true, or both "A" and "B" are true.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

The terms "first" and "second" may be reversed without changing the scope of the disclosure. That is, an element termed a "first" element or position may instead be termed a "second" element or position and an element termed a "second" element or position may instead be considered a "first" element or position.

Any steps described in this specification may be performed in any order or simultaneously unless stated or the context requires otherwise. Moreover, where a step is described as being performed after a step, this does not preclude intervening steps being performed.

It is also to be understood that, for any given component or embodiment described herein, any of the possible candidates or alternatives listed for that component may generally be used individually or in combination with one another, unless implicitly or explicitly understood or stated otherwise. It will be understood that any list of such candidates or alternatives is merely illustrative and not limiting, unless implicitly or explicitly understood or stated otherwise.

All literature and similar materials cited in this disclosure, including but not limited to patents, patent applications, articles, books, treaties and internet web pages are expressly incorporated by reference in their entirety for any purpose. Unless otherwise described, all technical and scientific terms used herein have a meaning as is commonly understood by one of ordinary skill in the art to which the various embodiments described herein belongs.

According to the specific examples described above, this disclosure considers a system for delivery of an analyte and a reference substance to measurement apparatus, the system comprising:
a switchable multi-way valve, comprising an analyte sample inlet, a reference sample inlet and a delivery outlet, wherein the analyte sample inlet is arranged to receive an analyte sample comprising the analyte, the reference sample inlet is arranged to receive a reference sample comprising the reference substance, and the delivery outlet is configured for passage of the analyte sample or the reference sample out of the multi-way valve towards the measurement apparatus;
a first means, for regulating a supply of the reference sample to the reference sample inlet; and
a second means, for regulating a supply of the analyte sample to the analyte sample inlet;
wherein the multi-way valve is switchable between a first position and a second position, wherein
   in the first position, the reference sample inlet is connected to the delivery outlet, for passage of the reference sample through the multi-way valve and towards the measurement apparatus; and
   in the second position, the analyte sample inlet is connected to the delivery outlet, for passage of the analyte sample through the multi-way valve and towards the measurement apparatus.

The system is a delivery system of a sample, wherein the sample may be an analyte (being a substance of interest for analysis, which may be an unknown substance) or a reference (being a known substance with known characteristics, to allow for comparison of measured characteristics with the analyte sample). The analyte is comprised within an analyte sample, and the reference substance is comprised within a reference sample. The analyte sample and the reference sample (collectively described as "a sample") are a fluid (e.g. a liquid or gas). For instance, the analyte or reference sample may be provided in a liquid or a gas phase, or be provided in a liquid or gas carrier.

The first means may be any mechanism for controllable supply of the reference sample, and the second means may be any mechanism for controllable supply of the analyte sample. The first and second means being configured for regulating a supply includes the means being configured to switch on or off the supply, or control or change the rate of the supply. Ideally, the first means is independently controllable (or independently operable) compared to the control (or operation) of the second means. In other words, the supply of the reference sample by the first means can be operated and controlled separately to the supply of the analyte sample by the second means. Typically, the first means is separate to the second means, and the first and second means may be of two different types.

The multi-way valve (for example, a six-way valve) may comprise a plurality of ports (being inlets or outlets), and may be a valve having at least two possible positions or configurations. The multi-way valve at least allows a first port at the valve to be connected to either a second or third port depending on the selected position of the valve. In this disclosure, connected means fluidly connected, to allow for fluid transmission between the said ports (or inlets and outlets). The plurality of ports at the valve may comprise at least an analyte sample inlet, a reference sample inlet, an analyte sample waste outlet, an analyte sample waste outlet, and a delivery outlet for passage towards the measurement apparatus.

The first means may comprise a syringe for containing the reference sample and configured to supply the reference sample to the reference sample inlet; and a syringe pump for the reference sample, arranged to cause reference sample to be expelled from the syringe for containing the reference sample upon operation of the syringe pump for the reference sample. The syringe together with the syringe pump provides a controllable and easy to use mechanism for supplying the reference sample. The rate of movement of the syringe pump (for instance, to apply a force to a plunger at the syringe) affects the rate of flow of the reference out of the syringe and into the analyte inlet at the valve. The syringe pump may be any common type of syringe pump or motorised actuator for applying force to a plunger at the syringe or otherwise reduce the fluid volume within the syringe. It will be understood that, in certain examples, the first means could comprise a syringe without use of a syringe pump. For instance, the syringe could be user operated directly.

The syringe for containing the reference sample and the syringe pump for the reference sample may be configured to supply the reference sample when the multi-way valve is in the first position. For instance, the syringe pump may be arranged to operate (or pump) at least when the multi-way valve is in the first position. The syringe pump may operate only during a period when the multi-way valve is in the first position, or may additionally also be arranged to operate for some or all of the time outside of this period during which the measurement apparatus is in use.

The second means may comprise an autosampler, configured to deliver an analyte sample supplied from the autosampler to the analyte sample inlet. The autosampler is an instrument for automated supply of a measured, defined volume of a sample. The autosampler in the present disclosure may include a storage loop (being a tube, trap, or vial to contain a fixed volume of fluid), into which a known volume of sample can be loaded and then ejected at a user selected or preprogramed time. The autosampler may be controlled or automated by use of a programmable controller. The autosampler typically comprises a pump, the rate of pump flow determining the rate of flow of the analyte out of the autosampler upon ejection of the analyte.

The autosampler may be configured to load the analyte sample at the autosampler when the multi-way valve is in the first position, and the autosampler may be configured to eject the analyte sample from the autosampler towards the analyte sample inlet when the multi-way valve is in the second position. In other words, the analyte sample may be loaded at the autosampler whilst a reference sample is passed out of the delivery outlet at the multi-way valve. Accordingly, the system of the present disclosure can enable analysis of the reference sample at the measurement apparatus simultaneously with loading of the analyte sample at the autosampler.

The second means may comprise a syringe for containing the analyte sample, configured to supply the analyte sample to the analyte sample inlet, and a syringe pump for the analyte sample, arranged to cause analyte sample to be expelled from the second syringe for containing the analyte sample upon operation of the syringe pump for the analyte. The syringe and syringe pump provide a controllable and easy to use mechanism for supplying the analyte sample. The syringe and syringe pump as the second means may be a less expensive mechanism for supplying the analyte sample to the analyte inlet at the multi-way valve than compared to use of an autosampler as the second means. Nevertheless, the rate of application of the syringe pump (for instance, to apply a force to a plunger at the syringe) determines the rate of flow of the analyte out of the syringe and into the analyte inlet at the valve. The syringe may be any common type of syringe pump or motorised actuator for applying force to a plunger at the syringe. It will be understood that, in certain examples, the first means could comprise a syringe without use of a syringe pump. For instance, the syringe could be user operated directly.

The syringe for containing the analyte sample and the syringe pump for the analyte sample may be configured to supply the analyte sample when the multi-way valve is in the second position. For instance, the syringe pump may be arranged to operate (or pump) at least when the multi-way valve is in the second position. The syringe pump may operate only during a period when the multi-way valve is in the second position, or may also be arranged to operate for some or all of the time outside of this period and during which the measurement apparatus is in use.

In certain examples, the first means may be any suitable supply of the reference sample to the reference sample inlet together with a first pump for controlling the flow of that reference sample supply. In the same examples, the second means may be any suitable supply of the analyte sample to the analyte sample inlet together with a second pump for controlling the flow of that analyte sample supply.

In some particular examples, the first means may comprise an autosampler, configured to deliver a reference sample supplied from the autosampler to the reference sample inlet. The autosampler being the first means may be different and separate from any autosampler used as the second means. Alternatively, the autosampler being the first and second means may be the same instrument, being a dual outlet autosampler, for instance having a first and a second storage loop for the reference sample and the analyte sample respectively. A first outlet from the dual outlet autosampler may be configured for supply of the reference sample to the reference sample inlet, and a second outlet from the dual outlet autosampler may be configured for supply of the analyte sample to the analyte sample inlet.

The system may further comprise a programmable controller configured to control the multi-way valve being in either the first position or the second position. The programmable controller may be programmed before use (for instance, by a user or operator of the overall system), to allow for automated measurements. The controller may comprise a computer processor to carry out commands forming part of a computer program. The programmable controller may be further configured to control operation of the first means and the second means. For instance, the programmable controller may be configured to control an autosampler being a second means, and/or a syringe pump connected at the syringe being the first or the second means. The programmable controller may control the autosampler such that the analyte is ejected from the autosampler only when the valve is in the second position (so as to deliver the analyte from the autosampler through the delivery outlet and towards the measurement apparatus). The programmable controller may be further configured to control the measurement apparatus.

The system may further comprise a chromatography column arranged between the second means and the analyte sample inlet, such that the analyte sample is separated into components upon exiting of the chromatography column and before entering the analyte sample inlet. For instance, the analyte may exit an autosampler (being the first means) and enter a chromatography column. The analyte sample is then separated into constituent parts when moving through the chromatography column, so that the separate constituents exit the chromatography column and are each passed to the analyte inlet at different time intervals corresponding to their separation (the multi-way valve being placed in the second position at those times). During time periods between the delivery of each constituent part, the switchable valve may be arranged in the first position, so that reference sample is passed through the multiway valve and out of the delivery outlet towards the measurement apparatus. As such, reference sample is delivered to the measurement apparatus intervening the delivery of each constituent part of the analyte. This improves the accuracy and sensitivity of the overall measurement.

The multi-way valve may comprise an analyte sample waste outlet and a reference sample waste outlet, wherein in the first position of the multi-way valve, the analyte sample inlet is connected to the analyte sample waste outlet, and in the second position of the multi-way valve, the reference sample inlet is connected to the reference sample waste outlet.The system may be part of an apparatus for isotope ratio mass spectrometry, the apparatus further comprising the measurement apparatus. The measurement apparatus may be a mass spectrometer comprising a sample input. The delivery outlet of the multi-way valve may be configured for the passage of the analyte sample or the reference sample out of the multi-way valve to the sample input of the mass spectrometer. When the multi-way valve is in the first position, the reference sample inlet may be connected to the delivery outlet, for passage of the reference sample through the multi-way valve and to the sample input of the mass spectrometer. When the multi-way valve is in the second position, the analyte sample inlet is connected to the delivery outlet, for passage of the analyte sample through the multi-way valve and to the sample input of the mass spectrometer.

The mass spectrometer may be configured to receive and measure the analyte sample when the multi-way valve is in the second position. The mass spectrometer may be configured to determine an isotopic ratio of the analyte by comparison of a measurement of the analyte sample with a measurement of the reference sample.

The mass spectrometer may be an isotope ratio mass spectrometer.

In a further example there is described a method for delivery of an analyte and a reference substance to measurement apparatus, comprising:
supplying an analyte sample to an analyte sample inlet at a multi-way valve, the analyte sample comprising the analyte, wherein the supply of the analyte sample is regulated by a first means;
supplying a reference sample to a reference sample inlet at the multi-way valve, the reference sample comprising the reference substance, wherein the supply of the reference sample is regulated by a second means;
switching the multi-way valve from a first position to a second position, the multi-way valve further comprising a delivery outlet configured for passage of the analyte sample or the reference sample towards the measurement apparatus;
wherein
   in the first position, the reference sample inlet is connected to the delivery outlet for passage of the reference sample through the multi-way valve and towards the measurement apparatus; and
   in the second position, the analyte sample inlet is connected to the delivery outlet for passage of the analyte sample through the multi-way valve and towards the measurement apparatus.

In a further example, there is described a method of isotope ratio mass spectrometry, comprising:
supplying an analyte sample to an analyte sample inlet at a multi-way valve, the analyte sample comprising the analyte, wherein the supply of the analyte sample is regulated by a first means;
supplying a reference sample to a reference sample inlet at the multi-way valve, the reference sample comprising a reference substance, wherein the supply of the reference sample is regulated by a second means, the multi-way valve further comprising a delivery outlet configured for passage of the analyte sample or the reference sample towards a mass spectrometer;
arranging the multi-way valve in a first position for delivery and measurement of the reference sample to the mass spectrometer;
arranging the multi-way valve in a second position for delivery and measurement of the analyte sample to the mass spectrometer;
determining an isotopic ratio of the analyte by comparison of a measurement of the analyte sample with a measurement of the reference sample;
wherein
   in the first position, the reference sample inlet is connected to the delivery outlet for passage of the reference sample through the multi-way valve and towards the mass spectrometer; and
   in the second position, the analyte sample inlet is connected to the delivery outlet for passage of the analyte sample through the multi-way valve and towards the mass spectrometer.

The characteristics of features discussed above in relation to the system, will also apply to like features in any of the methods.

The mass spectrometer or measurement apparatus may be an isotope ratio mass spectrometer.

The first means may comprise a syringe configured to supply the reference sample to the reference sample inlet, and a syringe pump for the reference sample. The rate of movement or flow at the syringe pump may adjust the rate of flow of the reference sample expelled from the syringe.

Either method may further comprise, when the multi-way valve is switched to the first position, adjusting the operation of the syringe pump for the reference sample to increase or adjust a rate of flow of the reference sample expelled from the syringe for containing the reference sample. Adjusting the flow may comprise switching on the syringe pump to begin expulsion of the reference sample, or to change the operation of the syringe pump to increase the flow of the reference sample out of the syringe pump.

The second means may comprise an autosampler configured to deliver an analyte sample to the analyte sample inlet. The autosampler typically comprises a pump, used to push or eject the analyte sample out of the autosampler. Changing the pump rate at the pump may change the flow rate of the analyte sample out of the autosampler.

Either method may further comprise, when the multi-way valve is in the first position, loading, at the autosampler, the analyte sample; and when the multi-way valve is in the second position ejecting, from the autosampler, the analyte sample towards the analyte sample inlet. In other words, the analyte sample is loaded at the autosampler whilst a reference sample is passed out of the delivery outlet at the multi-way valve. Accordingly, the system of the present disclosure enables analysis of the reference sample at the measurement apparatus simultaneously with loading of the analyte sample.

The second means may comprise a syringe configured to supply the analyte sample to the analyte sample inlet, and a syringe pump for the analyte sample. The rate of movement or flow of the syringe pump may adjust the rate of flow of the analyte sample expelled from the syringe.

Either method may further comprise, when the multi-way valve is switched to the second position, adjusting the operation of the syringe pump for the analyte sample to increase or adjust a rate of flow of the analyte sample expelled from the syringe for containing the analyte sample. For instance, the syringe pump may be arranged to operate (or pump) at least when the multi-way valve is in the second position. The syringe pump may operate only during a period when the multi-way valve is in the second position, or may also be arranged to operate for some or all of the time outside of this period during which the measurement apparatus is in use

There is described a method for isotope ratio mass spectrometry, comprising:
arranging the multi-way valve in the system as described above in the first position for delivery and measurement of the reference substance to the measurement apparatus, wherein the measurement apparatus is a mass spectrometer;
arranging the multi-way valve in the system in the second position for delivery and measurement of the analyte to the measurement apparatus, wherein the measurement apparatus is a mass spectrometer;
determining an isotopic ratio of the analyte by comparison of a measurement of the analyte sample with a measurement of the reference substance.

Also within the disclosure is apparatus for isotope ratio mass spectrometry, comprising:
a mass spectrometer; and
the system as described above, wherein the measurement apparatus is the mass spectrometer;
the system being configured to deliver an analyte or a reference substance to a sample input of the mass spectrometer.

The present invention is also described in accordance with the following numbered clauses:
Clause 1. A system for delivery of an analyte and a reference substance to measurement apparatus, the system comprising:
   a switchable multi-way valve, comprising an analyte sample inlet, a reference sample inlet and a delivery outlet, wherein the analyte sample inlet is arranged to receive an analyte sample comprising the analyte, the reference sample inlet is arranged to receive a reference sample comprising the reference substance, and the delivery outlet is configured for passage of the analyte sample or the reference sample out of the multi-way valve towards the measurement apparatus;
   a first means, for regulating a supply of the reference sample to the reference sample inlet; and
   a second means, for regulating a supply of the analyte sample to the analyte sample inlet;
   wherein the multi-way valve is switchable between a first position and a second position, wherein
      in the first position, the reference sample inlet is connected to the delivery outlet, for passage of the reference sample through the multi-way valve and towards the measurement apparatus; and
      in the second position, the analyte sample inlet is connected to the delivery outlet, for passage of the analyte sample through the multi-way valve and towards the measurement apparatus.
Clause 2. The system of clause 1, wherein the first means comprises:
   a syringe for containing the reference sample and configured to supply the reference sample to the reference sample inlet; and
   a syringe pump for the reference sample, arranged to cause reference sample to be expelled from the syringe for containing the reference sample upon operation of the syringe pump for the reference sample.
Clause 3. The system of clause 2, wherein the syringe for containing the reference sample and the syringe pump for the reference sample are configured to supply the reference sample when the multi-way valve is in the first position.
Clause 4. The system of any preceding clause, wherein the second means comprises an autosampler, configured to deliver an analyte sample supplied from the autosampler to the analyte sample inlet.
Clause 5. The system of clause 4, wherein the autosampler is configured to load the analyte sample at the autosampler when the multi-way valve is in the first position, and the autosampler is configured to eject the analyte sample from the autosampler towards the analyte sample inlet when the multi-way valve is in the second position.
Clause 6. The system of any one of clauses 1 to 3, wherein the second means comprises:
   a syringe for containing the analyte sample, configured to supply the analyte sample to the analyte sample inlet, and
   a syringe pump for the analyte sample, arranged to cause analyte sample to be expelled from the second syringe for containing the analyte sample upon operation of the syringe pump for the analyte.
Clause 7. The system of clause 6, wherein the syringe for containing the analyte sample and the syringe pump for the analyte sample are configured to supply the analyte sample when the multi-way valve is in the second position.
Clause 8. The system of any preceding clause, further comprising a programmable controller configured to control the multi-way valve being in either the first position or the second position.
Clause 9. The system of clause 8, the programmable controller further configured to control operation of the first means and the second means.
Clause 10. A method for delivery of an analyte and a reference substance to measurement apparatus, comprising:
   supplying an analyte sample to an analyte sample inlet at a multi-way valve, the analyte sample comprising the analyte, wherein the supply of the analyte sample is regulated by a first means;
   supplying a reference sample to a reference sample inlet at the multi-way valve, the reference sample comprising the reference substance, wherein the supply of the reference sample is regulated by a second means;
   switching the multi-way valve from a first position to a second position, the multi-way valve further comprising a delivery outlet configured for passage of the analyte sample or the reference sample towards the measurement apparatus;
   wherein
      in the first position, the reference sample inlet is connected to the delivery outlet for passage of the reference sample through the multi-way valve and towards the measurement apparatus; and
      in the second position, the analyte sample inlet is connected to the delivery outlet for passage of the analyte sample through the multi-way valve and towards the measurement apparatus.
Clause 11. The method of clause 10, wherein the first means comprises a syringe configured to supply the reference sample to the reference sample inlet, and a syringe pump for the reference sample.
Clause 12. The method of clause 11, wherein the method further comprises:
   when the multi-way valve is in the first position, adjusting the operation of the syringe pump for the reference sample to cause reference sample to be expelled from the syringe for containing the reference sample.
Clause 13. The method of any one of clauses 10 to 12, wherein the second means comprises an autosampler configured to deliver an analyte sample to the analyte sample inlet.
Clause 14. The method of clause 13, wherein the method further comprises:
   when the multi-way valve is in the first position, loading, at the autosampler, the analyte sample; and
   when the multi-way valve is in the second position ejecting, from the autosampler, the analyte sample towards the analyte sample inlet.
Clause 15. The method of any one of clauses 10 to 12, wherein the second means comprises a syringe configured to supply the analyte sample to the analyte sample inlet, and a syringe pump for the analyte sample.
Clause 16. The method of clause 15, wherein the method further comprises:
   when the multi-way valve is in the second position, adjusting the operation of the syringe pump for the analyte sample to cause analyte sample to be expelled from the syringe for containing the analyte sample.

## Claims

1. An apparatus for isotope ratio mass spectrometry, the apparatus comprising:
a mass spectrometer comprising a sample input; and
a system for delivery of an analyte and a reference substance to the mass spectrometer, the system comprising:
a switchable multi-way valve, comprising an analyte sample inlet, a reference sample inlet and a delivery outlet, wherein the analyte sample inlet is arranged to receive an analyte sample comprising the analyte, the reference sample inlet is arranged to receive a reference sample comprising the reference substance, and the delivery outlet is configured for passage of the analyte sample or the reference sample out of the multi-way valve to the sample input of the mass spectrometer;
a first means, for regulating a supply of the reference sample to the reference sample inlet; and
a second means, for regulating a supply of the analyte sample to the analyte sample inlet;
wherein the multi-way valve is switchable between a first position and a second position, wherein
in the first position, the reference sample inlet is connected to the delivery outlet, for passage of the reference sample through the multi-way valve and to the sample input of the mass spectrometer; and
in the second position, the analyte sample inlet is connected to the delivery outlet, for passage of the analyte sample through the multi-way valve and to the sample input of the mass spectrometer.

2. The apparatus of claim 1, wherein the mass spectrometer is configured to receive and measure the reference sample when the multi-way valve is in the first position,
wherein the mass spectrometer is configured to receive and measure the analyte sample when the multi-way valve is in the second position,
wherein the mass spectrometer is configured to determine an isotopic ratio of the analyte by comparison of a measurement of the analyte sample with a measurement of the reference sample.

3. The apparatus of claim 1, wherein the mass spectrometer is an isotope ratio mass spectrometer.

4. The apparatus of any one of claims 1 to 3, wherein the first means comprises:
a syringe for containing the reference sample and configured to supply the reference sample to the reference sample inlet; and
a syringe pump for the reference sample, arranged to cause reference sample to be expelled from the syringe for containing the reference sample upon operation of the syringe pump for the reference sample.

5. The apparatus of claim 4, wherein the syringe for containing the reference sample and the syringe pump for the reference sample are configured to supply the reference sample when the multi-way valve is in the first position.

6. The apparatus of any preceding claim, wherein the second means comprises an autosampler, configured to deliver an analyte sample supplied from the autosampler to the analyte sample inlet.

7. The apparatus of claim 6, wherein the autosampler is configured to load the analyte sample at the autosampler when the multi-way valve is in the first position, and the autosampler is configured to eject the analyte sample from the autosampler towards the analyte sample inlet when the multi-way valve is in the second position.

8. The apparatus of any one of claims 1 to 5, wherein the second means comprises:
a syringe for containing the analyte sample, configured to supply the analyte sample to the analyte sample inlet, and
a syringe pump for the analyte sample, arranged to cause analyte sample to be expelled from the second syringe for containing the analyte sample upon operation of the syringe pump for the analyte.

9. The apparatus of claim 8, wherein the syringe for containing the analyte sample and the syringe pump for the analyte sample are configured to supply the analyte sample when the multi-way valve is in the second position.

10. The apparatus of any preceding claim, wherein the system further comprises a programmable controller configured to control the multi-way valve being in either the first position or the second position;
optionally wherein the programmable controller is further configured to control operation of the first means and the second means.

11. A method for isotope ratio mass spectrometry, comprising:
supplying an analyte sample to an analyte sample inlet at a multi-way valve, the analyte sample comprising the analyte, wherein the supply of the analyte sample is regulated by a first means;
supplying a reference sample to a reference sample inlet at the multi-way valve, the reference sample comprising a reference substance, wherein the supply of the reference sample is regulated by a second means, the multi-way valve further comprising a delivery outlet configured for passage of the analyte sample or the reference sample towards a mass spectrometer;
arranging the multi-way valve in a first position for delivery and measurement of the reference sample to the mass spectrometer;
arranging the multi-way valve in a second position for delivery and measurement of the analyte sample to the mass spectrometer;
determining an isotopic ratio of the analyte by comparison of a measurement of the analyte sample with a measurement of the reference sample;
wherein
in the first position, the reference sample inlet is connected to the delivery outlet for passage of the reference sample through the multi-way valve and towards the mass spectrometer; and
in the second position, the analyte sample inlet is connected to the delivery outlet for passage of the analyte sample through the multi-way valve and towards the mass spectrometer.

12. The method of claim 11, wherein the mass spectrometer is an isotope ratio mass spectrometer.

13. The method of claim 11 or claim 12, wherein the first means comprises a syringe configured to supply the reference sample to the reference sample inlet, and a syringe pump for the reference sample;
optionally wherein the method further comprises:
when the multi-way valve is in the first position, adjusting the operation of the syringe pump for the reference sample to cause reference sample to be expelled from the syringe for containing the reference sample.

14. The method of any one of claims 11 to 14, wherein the second means comprises an autosampler configured to deliver an analyte sample to the analyte sample inlet;
optionally wherein the method further comprises:
when the multi-way valve is in the first position, loading, at the autosampler, the analyte sample; and
when the multi-way valve is in the second position ejecting, from the autosampler, the analyte sample towards the analyte sample inlet.

15. The method of any one of claims 11 to 14, wherein the second means comprises a syringe configured to supply the analyte sample to the analyte sample inlet, and a syringe pump for the analyte sample;
optionally wherein the method further comprises: when the multi-way valve is in the second position, adjusting the operation of the syringe pump for the analyte sample to cause analyte sample to be expelled from the syringe for containing the analyte sample.
